# EUROPEAN PATENT SPECIFICATION

(11) **EP 3 710 692 B1**
(45) Date of publication and mention of the grant of the patent: **21.06.2023**
(21) Application number: 18803538.0
(22) Date of filing: 07.11.2018
(51) Int. Cl.: F03D 1/06, F03D 80/30

(54) **WIND TURBINE BLADE ASSEMBLY**
WINDTURBINENSCHAUFELANORDNUNG
ENSEMBLE PALE D'ÉOLIENNE

(30) Priority: 13.11.2017 DK PA201770851
(43) Date of publication of application: 23.09.2020
(73) Proprietor: Vestas Wind Systems A/S, 8200 Aarhus N (DK)
(72) Inventor: SLOTH, Erik, 8410 Rønde (DK); LAURITSEN, Steen M., 8250 Egå (DK)
(74) Representative: Vestas Patents Department
(86) International application number: PCT/DK2018/050290
(87) International publication number: WO 2019/091533

(56) References cited:
- WO-A1-2015/055213
- US-A1- 2011 123 343
- US-A1- 2012 100 002
- US-A1- 2012 257 972

## Description

### FIELD OF THE INVENTION

The present invention relates to a wind turbine blade assembly and a method for manufacturing the same.

### BACKGROUND TO THE INVENTION

In the wind turbine industry, there is a significant driver to increase production throughput in order to meet global demand. Known methods for manufacturing wind turbine blades utilise a mould to manufacture wind turbine blades in two halves, which are later joined together to form the completed blade. However, moulded composite manufacturing methods are often poorly adaptable since each mould may be constrained to creating a blade of a single shape. Due to the inherent cost of mould manufacturing, it is common for manufacturers to use a single mould shape for each of their respective turbine models. For this reason, many turbine blades are not optimised to the conditions at their intended operating site. This can lead to a compromised blade design.

It is therefore desirable to provide a turbine blade that can not only be manufactured quickly and efficiently, but that can also be easily adapted such that each blade can be "micro-optimised" for local site conditions.

An example of a known wind turbine rotor blade is described in US 2012/100002 A1. Another example is disclosed in WO 2015/055213 A1.

### SUMMARY OF THE INVENTION

A first aspect of the invention provides a wind turbine blade assembly according to claim 1.

Advantageously, the blade is capable of being manufactured efficiently and economically to meet global demand whilst still providing each turbine blade with sufficient design adaptability to allow each wind turbine blade to be optimised to the conditions at its intended site location.

The at least one blade extension portion may be attached on the blade using mechanical fasteners. Alternatively, the attachment may be glued, may be threaded or may be made using any other suitable attachment means. The at least one blade extension portion may be releasably detachable.

The at least one blade extension portion may be single blade extension portion of a desired length. Alternatively a plurality of blade extension portions may be joined together to achieve a desired length. The plurality of blade extension portions may be a plurality of modular extensions, each blade extension portion having a uniform length. Alternatively, each of the plurality of blade extension portions may have different lengths.

The main blade portion and the blade tip module are spaced from each in the spanwise direction. The blade extension portion is located between the main blade portion and the blade tip module, i.e. it is sandwiched between the main blade portion and the blade tip module.

It shall be appreciated that the main blade portion(s), blade extension portion(s) and blade tip module are manufactured as discrete, separate parts or assemblies that are subsequently joined together to form the completed blade assembly. It is not intended that the main blade portion, blade extension portion and blade tip module are co-moulded.

The blade tip module may consist exclusively of metal. The blade tip module may consist exclusively of copper.

The blade tip module may be electrically connected to a lightning protection system of the wind turbine blade.

The at least one blade extension portion may have at least one channel extending therethrough. The at least one main blade portion and the blade tip module may interconnect through the at least one channel.

The at least one blade extension portion may have a single channel. Alternatively, the at least one blade extension portion may have a plurality of channels. The at least one channel may be substantially straight relative to a spanwise axis of the blade. The at least one channel may be angled, e.g. with respect to the spanwise axis.

The at least one main blade portion may have a first connector. The blade tip module, may have a second connector. The at least one main blade portion and the blade tip module may interconnect via the first and second connectors.

The first connector may be a first projection. The first projection may extend from the at least one main blade portion. The second connector may be a second projection. The second projection may extend from the blade tip module. The first and second projections may overlap inside the at least one blade extension portion.

The first connector, second connector and the at least one channel may have mating cross-sectional geometry.

The second projection may have a slot which receives the first projection.

The first and second connectors may act as both a mechanical and an electrical connection.

The connection between the first and second connectors may be threaded. Alternatively, the connection may be glued. The connection may be mechanically fastened.

The first and second connectors may be integrally formed with one of the at least one main blade portion, the at least one blade extension portion and the blade tip module.

The at least one main blade portion may have a tip end. The at least one blade extension portion may have an inboard end. The tip end of the at least one main blade portion and the inboard end of the at least one blade extension portion may have matching aerofoil sections.

The blade tip module may have an inboard end. The tip end of the at least one main blade portion and the inboard end of the blade tip module may have matching aerofoil sections.

The inboard end of the blade tip module and the tip end of the at least one main blade portion may have mismatched aerofoil sections.

The blade tip module may have a body. The body of the blade tip module may overlap the outboard end of the blade extension portion. The blade tip module body may comprise a recess having a lip. The recess may receive the outboard end of the blade extension portion. The lip may overlap the outboard end of the blade extension portion.

The blade tip module may have a leading edge and a trailing edge. The leading edge and the trailing edge of the blade tip module may extend beyond the respective leading and trailing edges of the adjacent blade extension portion.

The blade tip module may be canted upwardly or downwardly with respect to the spanwise axis of the main blade portion.

The at least one main blade portion and the at least one blade extension portion may each include composite material. The composite material may be glass-fibre reinforced. The composite material may be carbon-fibre reinforced. The composite material may be a combination of both carbon and glass fibre reinforcements. The at least one main blade portion and the at least one blade extension portion may include plastics material. The at least one blade extension portion may be 3D printed from a composite material, or a non-composite material.

The at least one main blade portion may be tapered in the spanwise direction.

The at least one blade extension portion may be tapered in the spanwise direction.

The at least one blade extension portion may have a constant aerofoil section in the spanwise direction.

The at least one blade extension portion may comprise a plurality of serrations protruding from a trailing edge of the at least one blade extension portion.

The wind turbine blade assembly may comprise part of a wind turbine.

A second aspect of the invention provides a method of manufacturing a wind turbine blade assembly having a root end, a tip end, a leading edge, a trailing edge, and a span in a spanwise direction, the method comprising the steps: manufacturing at least one main blade portion in at least one mould; removing the at least one main blade portion from the at least one mould; providing a plurality of blade extension portions each having an aerofoil section; providing at least one metallic blade tip module configured as a lightning receptor, said metallic blade tip module having an aerofoil profile; selecting at least one of the plurality of blade extension portions to achieve a desired turbine blade assembly length, wherein the spanwise length of each selected blade extension portion is no greater than 10% of the blade assembly span, attaching the selected blade extension portion to a tip end of the at least one main blade portion after the at least one main blade portion has been removed from the at least one mould, and attaching the blade tip module to the tip end of the blade assembly.

Advantageously, since the process of selecting and attaching the blade extension portion occurs after the main body portion(s) have been manufactured, the manufacturing process for the main blade portion(s) is substantially unaffected. This enables the blade length to be better optimised to site conditions without disrupting production throughput.

The at least one main blade portion may be manufactured via vacuum assisted resin transfer moulding (VARTM). It shall also be appreciated that other composite manufacturing methods, such as Resin Transfer Moulding (RTM), may alternatively be used.

The at least one main blade portion may be manufactured in multiple parts which are later joined to form the main blade portion. The multiple parts may be half shells. The half shells may be joined to form the at least one main blade portion inside the mould. The half shells may be joined to form the at least one main blade portion outside of the mould.

The at least one mould may be a single mould. The at least one mould may be a plurality of moulds configured to produce main blade portions having different shapes.

The wind turbine blade may be used on a wind turbine having a given power rating irrespective of the length of the at least one selected blade extension portion. It is important to note that wind turbines have a given power rating, and that the selection of the extension portion in this instance is made irrespective of the given power rating of the wind turbine for which the blade is intended.

A third aspect of the invention provides a method of retrofitting a wind turbine blade, the method comprising the steps: providing an existing wind turbine blade having at least one main blade portion with a root end and a tip end, and a blade tip module attached to the tip end of the at least one main blade portion; removing the blade tip module from the at least one main blade portion of the existing wind turbine blade; providing a plurality of blade extension portions, selecting at least one of the plurality of blade extension portions to achieve a desired turbine blade length, and connecting a metallic blade tip module to the at least one main blade portion with the at least one selected blade extension portion disposed between the tip end of the main blade portion and the blade tip module, wherein the blade tip module is configured as a lightning receptor, and wherein the blade tip module has an aerofoil profile.

Advantageously, this enables existing wind turbine designs to be better optimised to the conditions at their respective locations without being fully replaced. This therefore reduces cost and also mitigates the inherent inconvenience of having to replace an entire wind turbine in order to better optimise blade performance.

Furthermore, these retrofitting methods are also advantageous as they allow already extended wind turbine blades to be further extended or shortened, without undue burden, should further iterations for optimisation be required, which therefore allows each blade to be better optimised to their respective conditions.

The blade tip module used in the retrofit may be the existing blade tip module, or may be a different blade tip module.

The method of selecting the different blade tip module may further involve: providing a plurality of blade tip modules, each blade tip module having an aerofoil profile and each of the plurality of blade tip modules being compatible with a respective blade extension portion length, and selecting one of the plurality of blade tip modules based upon the length of the at least one selected blade extension portion. The step of attaching the blade tip module to the at least one main blade portion and to the at least one selected blade extension portion may involve using the selected blade tip module.

The plurality of blade tip modules may comprise a plurality of different blade tip module body types. The method may further involve: selecting one of the plurality of blade tip module body types based upon at least one of the following parameters: aerodynamic performance, local population density, durability.

The method may further involve selecting at least one of the plurality of blade extension portions to achieve a desired noise performance after an optimal length has been selected.

### BRIEF DESCRIPTION OF THE DRAWINGS

Embodiments of the invention will now be described with reference to the accompanying drawings, in which:
Figure 1 illustrates a wind turbine having blades mounted to a hub;
Figure 2 illustrates a schematic plan view of one of the blades according to one example;
Figure 3 illustrates a detailed schematic view of the attachment system of the blade illustrated in Figure 2;
Figure 4 illustrates a detailed schematic view of a wind turbine blade according to an alternative example;
Figure 5A illustrates a detailed schematic view of a wind turbine blade according to another alternative example;
Figure 5B illustrates a detailed schematic view of a wind turbine blade according to a further alternative example;
Figure 5C illustrates a detailed schematic view of a wind turbine blade according to yet a further alternative example;
Figure 6 illustrates a schematic representation of the method steps for manufacturing a wind turbine blade;
Figure 7 illustrates a schematic representation of a mould tool suitable for manufacturing the main blade portion of a wind turbine blade;
Figure 8 illustrates a trio of blade tip modules and compatible blade extension portions suitable for attachment to the main blade portion of the wind turbine blade;
Figure 9 illustrates a schematic representation of method steps for retrofitting an existing wind turbine blade;
Figure 10 illustrates a schematic plan view of an example of an existing wind turbine blade used in the method of figure 9;
Figure 11 illustrates a perspective view of an optimised blade extension portion according to an alternative example; and
Figures 12A-D illustrate views of a variety of different blade tip module body designs according to various alternative examples.

### DETAILED DESCRIPTION OF EMBODIMENT(S)

In this specification, terms such as leading edge, trailing edge, pressure surface, suction surface, thickness and chord are used. While these terms are well known and understood to a person skilled in the art, definitions are given below for the avoidance of doubt.

The term leading edge is used to refer to an edge of the blade which will be at the front of the blade as the blade rotates in the normal rotation direction of the wind turbine rotor.

The term trailing edge is used to refer to an edge of a wind turbine blade which will be at the back of the blade as the blade rotates in the normal rotation direction of the wind turbine rotor.

The chord of a blade is the straight line distance from the leading edge to the trailing edge in a given cross section perpendicular to the blade spanwise direction.

A pressure surface (or windward surface) of a wind turbine blade is a surface between the leading edge and the trailing edge, which, when in use, has a higher pressure than a suction surface of the blade.

A suction surface (or leeward surface) of a wind turbine blade is a surface between the leading edge and the trailing edge, which will have a lower pressure acting upon it than that of a pressure surface, when in use.

The thickness of a wind turbine blade is measured perpendicularly to the chord of the blade and is the greatest distance between the pressure surface and the suction surface in a given cross section perpendicular to the blade spanwise direction.

The term spanwise is used to refer to a direction from a root end of a wind turbine blade to a tip end of the blade, or vice versa. When a wind turbine blade is mounted on a wind turbine hub, the spanwise and radial directions will be substantially the same.

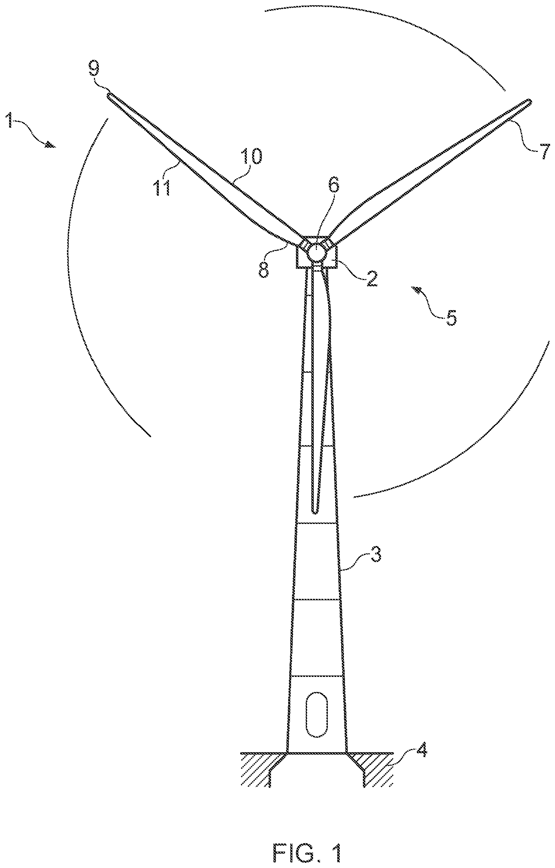

Figure 1 shows a wind turbine 1 including a nacelle 2 supported on a tower 3 that is mounted on a foundation 4. The wind turbine 1 depicted here is an onshore wind turbine such that the foundation 4 is embedded in the ground, but the wind turbine 1 could be an offshore installation in which case the foundation 4 would be provided by a suitable marine platform, such as a monopile or jacket.

The nacelle 2 supports a rotor 5 comprising a hub 6 to which three blades 7 are attached. It will be noted that the wind turbine 1 is the common type of horizontal axis wind turbine (HAWT) such that the rotor 5 is mounted at the nacelle 2 to rotate about a substantially horizontal axis defined at the centre at the hub 6. As is known, the blades 7 are acted on by the wind which causes the rotor 5 to rotate about its axis thereby operating generating equipment through a gearbox (not shown) that is housed in the nacelle 2. The generating equipment is not shown in figure 1 since it is not central to the examples of the invention.

Each of the blades 7 has a root end 8 proximal to the hub 6 and a tip end 9 distal from the hub 6. A leading edge 10 and a trailing edge 11 extend between the root end 8 and tip end 9, and each of the blades 7 has a respective aerodynamic high pressure surface (i.e. the pressure surface) and an aerodynamic low pressure surface (i.e. the suction surface) surface extending between the leading 10 and trailing edges 11 of the blade 7.

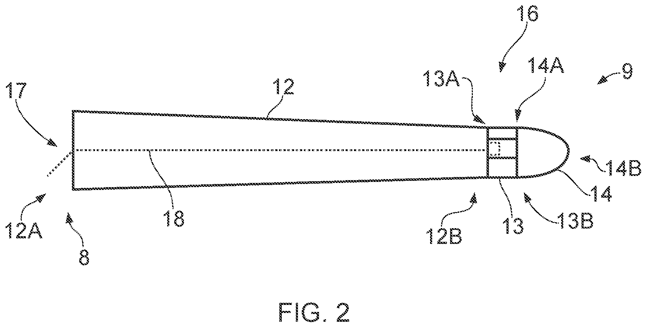

Figure 2 shows one exemplary blade made up of three distinct portions, a main blade portion 12, a blade extension portion 13 and a blade tip module 14. The blade extension portion 13 typically constitutes no more than 10% of the overall spanwise length of the blade 7.

The main blade portion 12 has a root end 12a which starts at the root end 8 of the blade 7 and extends in a spanwise direction to a tip end 12b of the main blade portion 12. The blade extension portion 13 has an inboard end 13a proximal to the tip end 12b of the main blade portion 12 and extends in a spanwise direction to an outboard end 13b proximal to the tip end 9 of the blade 7. Meanwhile, the blade tip module 14 extends from an outboard end 14b which starts at the tip 9 of blade 7 to an inboard end 14a proximal to the tip end 13b of the blade extension portion. It should be noted that the main blade portion 12 may comprise multiple blade segments joined together.

The blade extension portion 13 in this example is located at the tip end 12b of the main blade portion, between the main blade portion 12 and the blade tip module 14. The main blade portion 12, the blade extension portion 13 and blade tip module 14 each have respective aerofoil profiles in cross-section transverse to the blade spanwise direction. The main blade portion 12 has a generally tapering chord length in the spanwise direction towards a minimum chord length at its tip end 12b, and the tip end 12b of the main blade portion has an aerofoil section that substantially matches an aerofoil section of the inboard end 14a of the blade tip module 14. The blade extension portion 13 has a substantially constant aerofoil section in the spanwise direction. The tip end 12b of the main blade portion and the inboard end 13a of the extension portion also have matching aerofoil sections. However, the blade extension portion may alternatively have a tapering chord in the outboard spanwise direction.

In the illustrated example of figure 2, the blade extension portion 13 and blade tip module 14 are not integral parts of the blade but are instead attached to the tip end 12b of the main blade portion 12 after the main blade portion 12 has been manufactured. The tip end 9 of the blade 7 therefore comprises an attachment system 16 for attaching the blade extension portion 13 and the blade tip module 14 to the tip end 12b of the main blade portion 12. The attachment system 16 shall be described in greater detail later.

The main blade portion 12 and the blade extension portion 13 are predominantly manufactured from composite material, typically glass fibre reinforced plastic (GFRP) that comprises glass fibre fabric embedded in a cured resin matrix, although some areas may feature carbon fibre reinforcements.

The blade tip module is at least partly of metallic construction so that it is electrically conductive and functions as a tip lightning receptor for the blade 7. In this example, the blade tip module 14 is solid metal and made of a suitable material such as copper or a copper alloy such a brass, by way of non-limiting example. It is envisaged that the blade tip module 14 would be a cast component, although various manufacturing techniques, such as 3D printing, would be suitable.

So that it can act as a lightning receptor, the blade tip module 14 is attached to a lightning protection system 17 of the blade. In this example, the lightning protection system 17 is shown schematically as a down conductor cable 18 running along the length of the blade 7 to the root end 8 where it earths via a suitable energy handling mechanism (not shown). It should be appreciated that lightning protection systems may be more complex than shown here, but the precise form and detail of the lightning protection system is not relevant to the discussion.

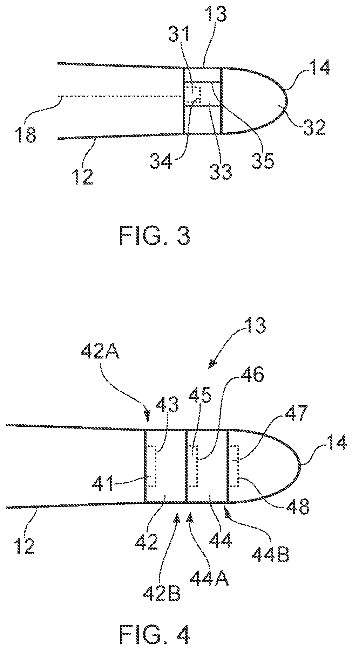

A detailed view of the attachment system 16 is shown in Figure 3. The main blade portion 12 comprises an insert member (not shown) which is a polymeric lozenge-like part which houses a first projection in the form of a metallic tab 31 which projects from the tip end 12b of the main blade portion 12. Typically, the tab 31 is added to the main blade portion 12 during the moulding process and is co-cured to form part of the main blade portion 12. During fabrication of the blade 7, the insert member is adhesively bonded into the interior cavity of the blade 7 and is positioned so that the tab 31 protrudes from a tip end 12a of the main body portion 12 of the blade, thereby providing a part to which the blade tip module 14 can be attached. The moulded insert member provides an anchor by which the blade tip module 14 may be attached into the blade 7 during the fabrication process.

In general, the insert member may take the form as described in WO2015/055213, by way of example. In such an arrangement, it is preferred, although not essential, that the down conductor 18 is welded to the tab 31 prior to the insert member being moulded over the tab 31 in which case the down conductor 18 forms a unit with the attachment system 16 for the purposes of the blade fabrication process. However, it can also be envisaged that the tab 31 could be fitted to the main blade portion 12 after it has been moulded. The tab 31 also features a plurality of through holes (not shown) configured to receive a threaded bolt or other type of fastener in order to facilitate the connection between the tab 31 and the blade tip module 14.

The blade tip module 14 comprises a blade tip module body 32 and a second projection in the form of a stud 33 which projects from the inboard end of the blade tip module body 32. The stud 33 further comprises a slot 34 configured to receive the tab 31 of the main blade portion 12. The stud 33 also typically features a plurality of apertures which extend through the slot 34 and correspond to the through holes of the tab 31 in order to facilitate the mechanical connection of the tab 31 to the slot 34 via inserting fasteners through the apertures and through holes respectively. The tab 31 and the slot 34 are typically of conductive material, such as copper, which enables the tab 31 and slot 34 to act as both a mechanical and electrical connection between the blade tip module 14 and the main blade portion 12.

The blade extension portion 13 has a channel 35 extending therethrough. The tab 31, stud 33 and channel 35 all have a mating cross-sectional geometry which enables both the stud 33 and the tab 31 to be inserted at opposing ends of the channel 35. In the illustrated example, the tab 31 is inserted into the channel 35 at an inboard end 13a of the blade extension 13 and the stud 33 is inserted into the channel at an outboard end 13b of the blade extension portion 13. The tab 31 and stud 33 overlap within the channel 35 and interconnect in the manner specified above which facilitates the connection of the blade extension portion 13 to the main blade portion 12 and blade tip module 14 of the blade 7. The blade extension portion 13 may also comprise a plurality of apertures (not shown) in order to better facilitate the mechanical connection between the tab 31 and the slot 34. The fasteners in this case are inserted through the apertures of the blade extension portion 13, through the apertures of the slot 34 and into the through holes located in the tab 31 thereby connecting the components. The apertures in the blade extension portion 13 are typically counter-sunk so as not to adversely affect the aerodynamic performance of the blade extension portion 13.

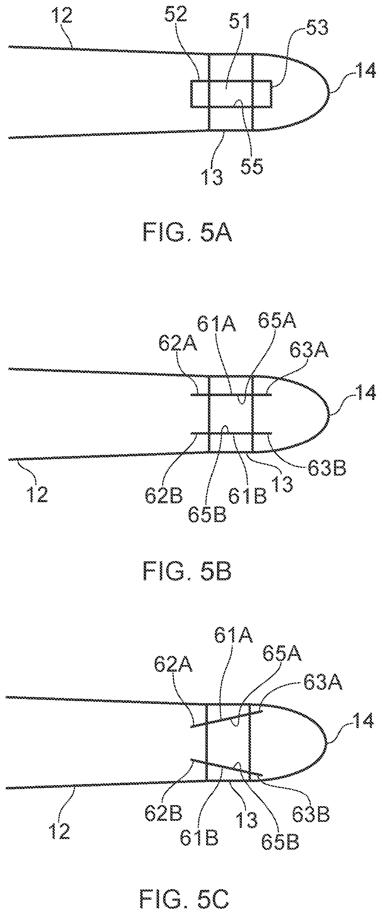

A variety of alternative connection systems are illustrated in Figures 4 and 5. One such alternative is shown in Figure 4 in which the channel 35 is omitted. In this illustrated alternative, the main blade portion 12 features a first projection 41 which projects from the tip end 12b of the main blade portion 12, similarly to the tab 31 illustrated in Figure 3. In the illustrated example, the blade extension portion 13 comprises multiple blade extension portions in the form of first and second blade extension portions 42, 44. The first blade extension portion 42 has a first slot 43 located at its inboard end 42a, which is configured to receive the first projection 41 of the main blade portion 12. The first blade extension portion 42 further comprises a second projection 45 which projects from its outboard end 42b, and the second projection 45 interconnects with a second slot 46 located in the inboard end 44a of the second blade extension portion 44. The second blade extension portion 44 further comprises a third projection 47 which projects from an outboard end 44b of the second blade extension portion 44 and interconnects with a third slot 48 located in the inboard end 14b of the blade tip module 14. Each of the slots 43, 46, 48 are then glued, or otherwise fixed, to their corresponding projection 41, 45, 47 to facilitate the mechanical connection of each of the constituent blade components.

Each of the slots 43, 46, 48 and projections 41, 45, 47 have a substantially matching cross-section which enables them to easily interconnect with any of the other slots or projections respectively. Although two blade extension portions are illustrated in Figure 4, it shall be appreciated that the blade extension portions can act as a modular system and therefore any number of blade extension portions can be used in order to achieve the desired blade length.

The first 42 and second 44 blade extension portions are made from a conductive material in order to facilitate an electrical connection between the blade tip module 14 and the main blade portion 12. A conductive adhesive may also be used to join the components to better facilitate an electrical connection. Alternatively, the electrical connection may be formed using a wired connection housed within a channel (not shown) extending through the blade extension portion 13 and joining with the conductor cable 18 of the main blade portion 12.

A further attachment system is described in Figure 5A wherein the connector 51 is a separate component to both the main blade portion 12 and the blade tip module 14. As shown in Figure 5A, the tip end 12b of the main blade portion 12 and the inboard end 14a of the blade tip module 14 each comprise a slot 52, 53. The slot has a pair of threaded ends (not shown) and one end of the connector 51 is configured to be received by a respective thread in the slot 52 of the main blade portion 12. The connector 51 extends through a channel 55 of the blade extension portion and is received at its other end by corresponding thread of the slot 53 of the blade tip module 14.

A further attachment system is shown in Figure 5B in which the connector 51 of Figure 5A has been replaced by a pair of connecting rods 61A and 61B. The connecting rods each have a pair of threaded ends (not shown) which are received by respective first and second threaded slots 62A, 62B of the main blade portion 12 at one end, extend through respective first and second channels 65A, 65B in the blade extension portion 13, and are received at their other end by respective threaded first and second slots 63A, 63B of the blade tip module 14. The threaded ends of the rods are configured so that rotating the rods pulls the blade tip module towards the main blade portion in a first direction of rotation, and separates the blade tip module from the main blade portion in a second direction of rotation opposite the first. The rods may be turned by tooling access through a hole in the blade assembly. In Figure 5B, the first and second channels 65A, 65B are substantially straight relative to a spanwise axis of the blade 7. Yet a further example is shown in Figure 5C in which the first and second channels 65A, 65B are angled with respect to the spanwise axis and converge from the tip end 9 to the root end 8 of the blade 7.

In the illustrated examples shown in Figures 5A-C, the connector 51 or connecting rods 61A and 61B and corresponding threads 62, 63 are made from a conductive material which thereby facilitates the electrical connection between the blade tip module 14 and the main blade portion 12.

Although the illustrated examples in Figures 3-5 have been described with reference to a mechanical, glued and threaded connection respectively, it shall be appreciated that any one of a threaded connection, a glued adhesive or mechanical connection, or any other suitable variation thereof, are suitable as a method of interconnection for each of these examples. Any one of more features of the examples shown in Figures 3-5 may be appropriately combined and used with the blade extension portions of Figure 2.

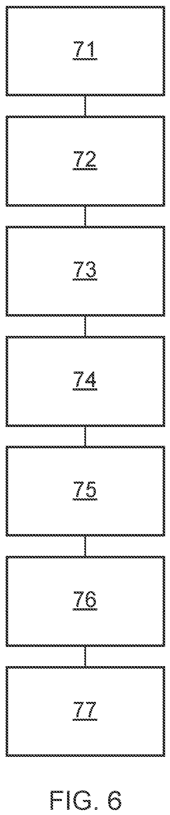

Figure 6 shows a schematic illustration of a method of manufacturing the wind turbine blade of the type illustrated in Figure 2. At a first stage of the method 71, the main blade portion 12 is manufactured as a corresponding set of half-shells (not shown). Each of the half-shells are separately moulded before being joined together (at a leading edge and a trailing edge) to form the main blade portion 12 of the blade. The precise construction of the blade shell is not central to the invention and so further detailed description is omitted for clarity.

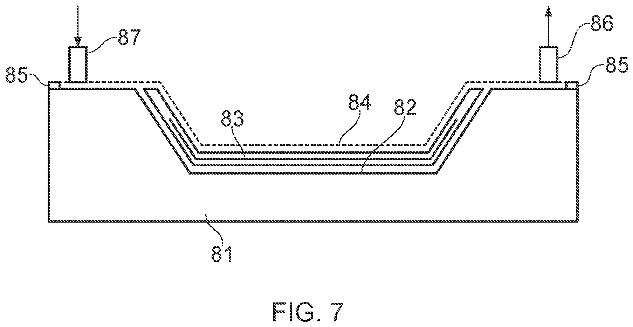

A vacuum-assisted resin transfer moulding apparatus suitable for moulding the half-shell which form the main blade portion 12 is illustrated in Figure 7. The apparatus has a female mould tool 81 having a mould surface 82 which corresponds to the desired shape of each half-shell. Layers of blade material 83 (which may comprise glass fibre fabric, carbon fibre fabric or pultrusions and sandwich core material) are laid up within the female mould tool 81 and is covered by a bagging film 84. The bagging film 84 has respective vacuum 86 and resin 87 ports disposed about opposing ends of the tool, and the bagging film 84 is sealed at opposing ends of the female mould tool 81 by an adhesive tape 85. After the blade material 83 has been laid up within the tool and the bagging film 84 has been applied and sealed a vacuum is pulled through the vacuum port 86 causing the blade material 83 to consolidate. When the blade material 83 has been consolidated the resin port 87 is connected to a resin reservoir (not shown) causing the resin to permeate through and infuse the blade material 83. Once the blade material 83 is sufficiently "wetted" by the resin, the now resin-infused blade material 83 can be cured within the female mould tool 81 to form the finished half-shell.

The method of vacuum-assisted resin transfer moulding (VARTM) is well known in the art and shall therefore not be described in any further detail. In another example, the half-shells may be formed using a pre-preg moulding process. After the half-shells have been moulded, they are joined to form the main blade portion 12. The main portion is then removed from the mould at stage 72 of the illustrated method.

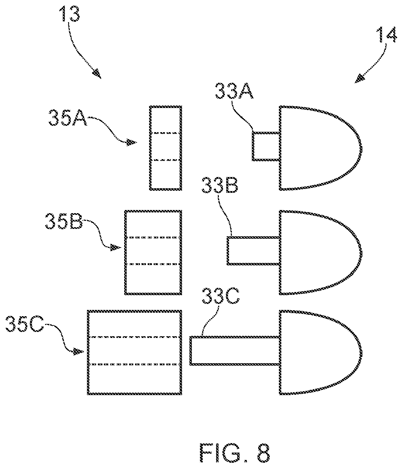

At stage 73 of the illustrated manufacturing method, a plurality of blade extension portions 13, each having a respective channel 35a, 35b, 35c, are provided as shown in Figure 8. Each of the plurality of blade extension portions has a different length, and therefore each blade extension portion 13 can be selected to provide a different length of blade 7. A plurality of blade tip modules 14 are also provided at stage 74. The studs 33a, 33b, 33c of each of the blade tip modules 14, shown in Figure 8, have a different length, and each of these lengths corresponds to the length of the respective channel 35a, 35b, 35c in the corresponding blade extension portion 13.

A blade extension portion 13 is selected at stage 75 of the illustrated method. The blade extension portion 13 is selected based upon a number of parameters. For example, this parameter may be the wind speed at the chosen site location for the wind turbine 1. For example, sites with higher average wind speeds generally require shorter (or no) blade extension portions 13 than sites with lower average wind speeds since less compensation is required at such sites in order to optimise the performance of the wind turbine blade 7. Other parameters such as blade noise, tip height restrictions or ground clearance height can also play a role in determining the selection of the blade extension portion 13. Areas with high population densities may, for example, bias noise reduction over energy cost, which is achieved via lower tip speeds, and therefore shorter blade extension portions are more likely to be favoured in such areas.

After a blade extension portion 13 has been selected to achieve the desired turbine blade length, a corresponding blade tip module 14 is selected accordingly at stage 76 of the illustrated method.

After the blade extension portion 13 and blade tip module 14 have been selected, the main blade portion 12, blade extension portion 13 and blade tip module 14 are attached at stage 77 of the illustrated method to form the turbine blade illustrated in Figure 2, having the desired length required to optimise the performance of the wind turbine at its intended site location. The methods of attachment and attachment systems have already been described previously in this application and shall therefore not be repeated in this section.

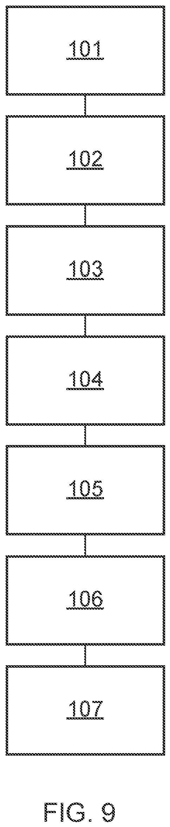

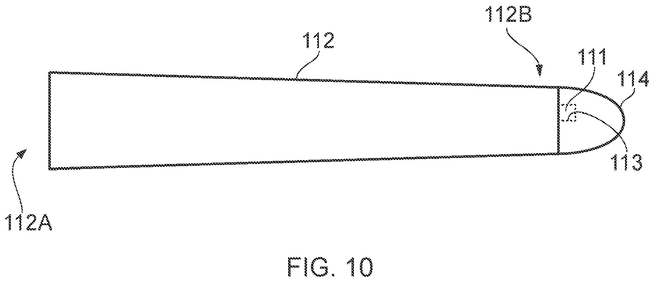

It is also possible to retro-fit a blade extension portion 13 to an existing turbine in order to better optimise the turbine for the conditions at its specific site location. A method of retro-fitting a blade extension portion 13 to an existing turbine is schematically illustrated in Figure 9. This method involves at stage 101 providing an existing turbine, as shown in Figure 10, having a main blade portion 112 with a root end 112a and a tip end 112b and a blade tip module 114 attached to the tip end 112b of the main blade portion 112 via a tab 111 which is received by a slot 113 of the blade tip module 114. It should be noted that the tab 111 and slot 113 in this example are identical to the tab 31 and slot 34 illustrated in Figure 3 and shall not be described in any further detail.

The blade tip module 114 is then removed at stage 102 of the illustrated method and a plurality of blade extension portions 13 and blade tip modules 114, such as those depicted in Figure 8, are provided at stages 103 and 104, and selected at stages 105-106 respectively, which correspond to the respective method stages 73-76 illustrated in Figure 6.

The selected blade tip module 14 is then attached to the main blade portion 12 with the selected blade extension portion 13 disposed between the tip end 12a of the main blade portion 12 and the selected blade tip module 14 thereby forming the wind turbine blade 7 shown in Figure 2. However, it should be noted that for an existing wind turbine blade with an attachment system of the type illustrated in Figure 4, the existing blade tip module 114 may be used and therefore stages 104 and 106 of providing a plurality of blade tip modules and selecting one of the plurality of blade tip modules may be omitted.

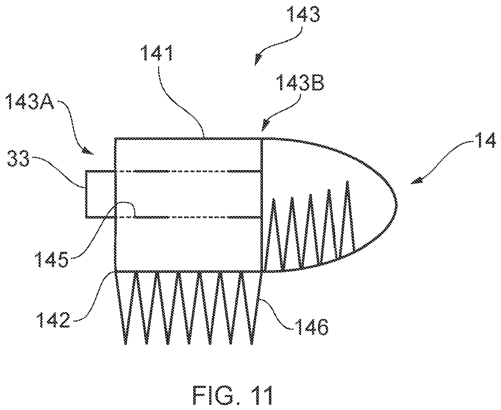

The above described examples each relate to various apparatus and methods intended to optimise the length of the turbine blade 7. However, each turbine blade 7 can also be further optimised for noise performance after an optimised length has been selected. An alternative example of a noise optimised blade extension portion 143 is illustrated in Figure 11.

The blade extension portion 143 has an inboard end 143a, an outboard end 143b and a channel 145 extending therethrough. The channel 145 is configured to receive a stud 33 of the blade tip module 14. It should be noted that this configuration corresponds to the example illustrated in Figure 3. The blade extension portion 143 has a leading edge 141 and a trailing edge 142 which form part of the leading 10 and trailing 11 edges of the turbine blade 7 respectively. The trailing edge 142 of the blade extension portion 143 comprises a plurality of serrations 146 which are arranged to create a "saw-tooth" pattern at the trailing edge 142 of the blade extension portion 143. The serrations 146 are configured to control airflow passing over this region of the blade extension 143 and thereby help to further reduce the noise generate by the turbine blade 7 without altering the length of the turbine blade 7.

The noise optimised blade extension portion 143 may be selected for optimising the noise performance of the blade 7 dependent upon the respective noise level requirements at the intended turbine site. It shall be appreciated that the noise optimised blade extension 143 may also be selected in conjunction with any of the length optimised blade extension portions 13 described previously in this application.

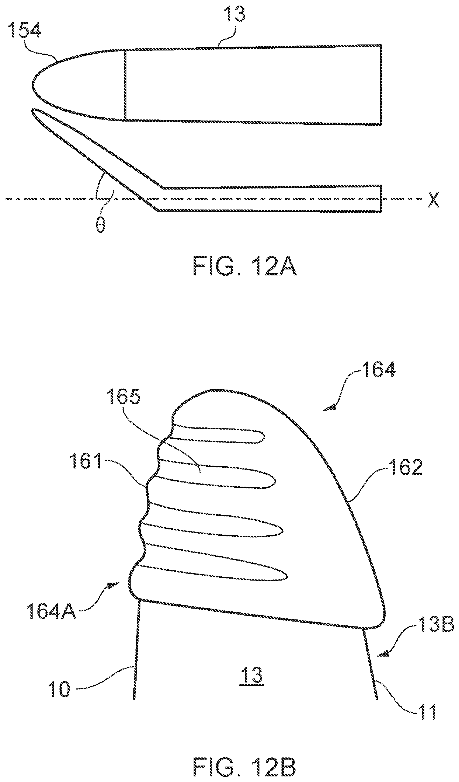

The above described examples each relate to various blade extension portions and methods of selecting at least one blade extension portion in order to better optimise each turbine blade to the conditions at their intended site. However, it shall also be appreciated that various blade tip module designs can also be selected in combination with the respective blade extension portions (discussed previously) in order to further optimise each turbine blade. A variety of different blade tip module designs are illustrated in Figures 12A-D.

Typically, the selection of blade tip module body 32 is dependent upon one or more of either aerodynamic performance, noise performance or durability. Aerodynamic performance is generally a desirable parameter in most circumstances since wind turbine blades with optimised aerodynamic performance are able to more efficiently generate electrical power, and are therefore highly desirable. For wind turbines in regular working conditions, there is often a significant bias placed upon aerodynamic performance.

An alternative blade tip module 14 which has been optimised for aerodynamic performance is illustrated in Figure 12A. The cross-sectional profile of the blade tip module 154 is the same as the blade tip module 14 shown in Figure 3 (previously discussed). However, as is shown in Figure 12A, the blade tip module 154 is canted at an angle theta relative to a plane X containing the tip chord and spanwise axis of the blade extension portion 13. The cant angle may be in an upwind or a downwind direction. The cant angle theta is typically in the region of 30-90 degrees.

However, where the wind turbine is located in an urban environment, blade noise is also a key parameter which often needs accounting for in order to prevent disruption to the local populace. Therefore, for turbine blades intended for use in this environment, noise reduction may play a greater role in selecting the optimal blade tip module body 32. Durability is another key parameter that often needs to be accounted for when selecting a blade tip module. Blade tip modules that have been optimised solely for aerodynamic performance are often less robust and therefore are more likely to require regular repair or replacement, particularly in the event of frequent lightning strikes. It is therefore often desirable to achieve a balance between optimised noise performance and durability for turbines located in urban areas.

An alternative blade tip module 164 which has been optimised for both noise performance and lightning strike durability is shown in Figure 12B.

The blade tip module 164 has a leading edge 161 and a trailing edge 162. Notably, the blade tip module 164 has a chord length at the inboard end 164A of the blade tip module 164 that is greater than the chord length of the outboard end 13B of the blade extension portion 13 (or main blade portion). The blade tip module leading edge 161 extends forward beyond the leading edge 10 of the blade 7 at the blade extension portion 13, and the blade tip module trailing edge 162 extends rearwards beyond the trailing edge 11 of the blade 7 at the blade extension portion 13.

Note, here, that the terms "forwards" and "rearwards" are used with respect to the normal direction of rotation of the HAWT 1, as shown in figure 1. Since the blade chord length varies with spanwise position, and also rotates due to twist of the blade, here the chord length is expressed as being at the tip or outboard end 13b of the blade extension portion 13 (or main blade portion).

The leading edge 161 of the blade tip module has a wave-like profile when observed in planform, as shown in Figure 12B. The wave-like profile comprises a plurality of rounded protuberances 165 extending forwardly. The wave-like profile appears substantially sinusoidal and is configured to channel air flow over the blade tip module 164 into a plurality of streams at increased flow velocities relative to the upstream flow. The wave-like profile extends along substantially the entire leading edge 161. The wave-like profile of the leading edge 161 promotes the so called 'tubercule effect' and therefore provides optimised noise performance to the blade tip module 164.

In some cases, such as off-shore wind turbines, where maintenance of the wind turbine is more difficult a noise of lesser importance, a greater bias may be placed on durability and therefore a durability optimised blade tip module 14 may be optimal in some instances.

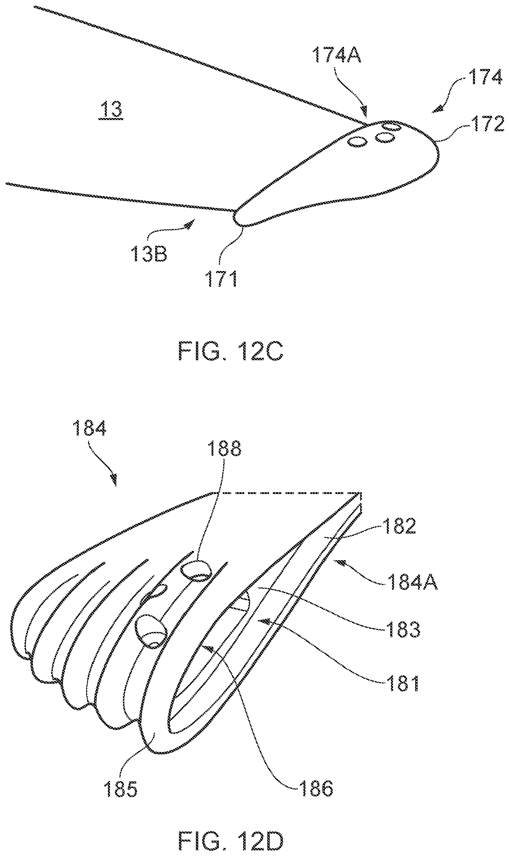

An alternative blade tip module 14 optimised for lightning durability is illustrated in Figure 12C. The blade tip module 174 has a leading edge 171 and a trailing edge 172 and, as with the blade tip module 164 illustrated in Figure 12B, the blade tip module 174 has a chord length at its inboard end 174A that is greater than the chord length of the outboard end 13b of the blade extension portion 13. The blade tip module leading edge 171 extends forward beyond the leading edge 10 of the blade 7 at the blade extension portion 13, and the blade tip module trailing edge 172 extends rearwards beyond the trailing edge 11 of the blade 7 at the blade extension portion 13. The material thickness of the blade tip module 174 is substantially thicker than other blade tip variants and therefore the blade tip module 174 is more durable to lightning strikes, although this comes at the expense of aerodynamic and noise performance.

In order to further optimise durability, it is an advantage of the blade tip module 14 of the illustrated example that it is configured to fit over the end of the blade tip extension 13 in a way that protects the junction between the two parts.

An alternative blade tip module 184, which is optimised for durability in an alternative manner to the blade tip module 174 illustrated in Figure 12C, is illustrated in Figure 12D.

The inboard end 184A of the blade tip module 184 according to the alternative example shown in Figure 12D and is slightly larger than the outboard end 13a of the blade extension portion 13 so as to provide a clearance fit. The inboard end 184A of the blade tip module 184 comprises a recess 181. The recess 181 is defined by an internal edge wall 182 and a base or floor 183. The blade tip module 184 comprises a lip 185 which extends around the periphery of the inboard end 184a of the blade tip module 184 and which defines the recess 181. The blade tip module 184 further comprises a slot 186 configured to receive a tab 31 of the main blade portion 12, as shown in Figure 3. The blade tip module 184 is further provided with a plurality of apertures 188 configured to receive mechanical fasteners (not shown) in order to facilitate a mechanical connection between the tab 31 and the blade tip module 184. The fasteners are inserted through the apertures 188 of the blade tip module 184 and into threaded holes (not shown) located in the tab 31 thereby connecting the components.

Similarly to the arrangement described in relation to Figure 3, the apertures 188 are typically counter-sunk so as not to adversely affect the aerodynamic performance of the blade tip module 184.

When the tab 31 of the main body portion 12 is received in the slot 186, the outboard end 13b of the blade extension portion 13 is received into the recess 181 so that the internal edge wall 182 overlaps the outboard end 13b of the blade extension portion 13. At least a part of the blade extension portion 13 is thereby covered by the lip 185. Significantly, the blade tip module 184 has a substantial thickness of material in the region of the lip 185. This means that the blade tip module 184 is robust against lightning strikes since there is plenty of mass of material around the lip 185 to absorb the intense heating effects of a lightning strike. Conversely, if the lip 185 was thin, then the blade tip module 184 would be more vulnerable to heat erosion. Therefore, the lip 185 can be described as a protective lip that protects the blade extension portion 13.

It shall be appreciated that the recessed blade tip module 184 illustrated in Figure 12D may also be selected in combination with any of the length optimised blade extension portions 13 or blade tip module body 32 designs described previously in this application.

Any of the above described blade tip modules, or features thereof, may be used in combination with any of the blades and blade extension portions described previously.

Although the invention has been described above with reference to one or more preferred embodiments, it will be appreciated that various changes or modifications may be made without departing from the scope of the invention as defined in the appended claims.

## Claims

1. A wind turbine blade assembly having a root end (8), a tip end (9), a leading edge (10), a trailing edge (11) and a span in a spanwise direction, the blade assembly comprising:
at least one main blade portion (12);
a metallic blade tip module (14) configured as a lightning receptor, said metallic blade tip module (14) having an aerofoil profile; **characterised in that**:
the wind turbine blade assembly further comprises at least one blade extension portion (13) having an aerofoil section;
the at least one main blade portion (12) and the blade tip module (14) are spaced from each other in the spanwise direction and the at least one blade extension portion (13) is attached between the at least one main blade portion (12) and the blade tip module (14) at the tip end (9) of the blade assembly, so that the at least one blade extension portion is sandwiched between the at least one main blade portion and the blade tip module;
and a spanwise length of each blade extension portion (13) is no greater than 10% of the blade assembly span.

2. The wind turbine blade assembly according to claim 1, wherein the blade tip module (14) consists exclusively of metal.

3. The wind turbine blade assembly according to any preceding claim, wherein the blade tip module (14) is electrically connected to a lightning protection system (17) of the wind turbine blade assembly.

4. The wind turbine blade assembly according to any preceding claim, wherein the at least one blade extension portion (13) further comprises at least one channel (35) extending therethrough, and wherein the at least one main blade portion (12) and the blade tip module (14) interconnect through the at least one channel (35) respectively.

5. The wind turbine blade assembly according to any preceding claim, wherein the at least one main blade portion (12) has a respective first connector, and the blade tip module (14) has a respective second connector, and the at least one main blade portion (12) and the blade tip module (14) interconnect via the respective first and second connectors, optionally wherein the first connector is a first projection (31), the second connector is a second projection (33), and the first (31) and second (33) projections overlap inside the at least one blade extension portion (13), and further optionally wherein the second projection (33) has a slot (34) which receives the first projection.

6. The wind turbine blade assembly according to claim 5, wherein the first and second connectors act as both a mechanical and an electrical connection.

7. The wind turbine blade assembly according to any preceding claim, wherein a tip end (12B) of the at least one main blade portion (12) and an inboard end (13A) of the at least one blade extension portion (13) have matching aerofoil sections, and/or wherein an inboard end (14A) of the blade tip module (14) and a tip end (12B) of the at least one main blade portion (12) have matching aerofoil sections.

8. The wind turbine blade assembly according to any preceding claim, wherein the at least one main blade portion (12) and the at least one blade extension portion (13) each include composite material.

9. The wind turbine blade assembly according to any preceding claim, wherein the at least one main blade portion (12) is tapered in the spanwise direction, and/or wherein the at least one blade extension portion (13) is tapered in the spanwise direction.

10. The wind turbine blade assembly according to any of claims 1 to 8, wherein the at least one blade extension portion (13) has a constant aerofoil section in the spanwise direction.

11. A wind turbine (1) comprising the wind turbine blade assembly according to any preceding claim.

12. A method of manufacturing a wind turbine blade assembly having a root end (8), a tip end (9), a leading edge (10), a trailing edge (11), and a span in a spanwise direction, the method comprising the steps of:
manufacturing at least one main blade portion (12) in at least one mould (81);
(81); removing the at least one main blade portion (12) from the at least one mould
providing a plurality of blade extension portions (13) each having an aerofoil section;
providing at least one metallic blade tip module (14) configured as a lightning receptor, said metallic blade tip module (14) having an aerofoil profile;
selecting at least one of the plurality of blade extension portions (13) to achieve a desired turbine blade assembly length, wherein the spanwise length of each selected blade extension portion (13) is no greater than 10% of the blade assembly span,
attaching the selected blade extension portion (13) to a tip end (12B) of the at least one main blade portion (12) after the at least one main blade portion (12) has been removed from the at least one mould (81), and
attaching the blade tip module (14) to the tip end (9) of the blade assembly.

13. The method according to claim 12, wherein each of the plurality of blade extension portions (13) has a different length, and the method further comprising the steps:
providing a plurality of metallic blade tip modules (14) each configured as a lightning receptor, each of the metallic blade tip modules (14) having an aerofoil profile and each of the plurality of blade tip modules (14) being compatible with one of the plurality of blade extension portions (13); and
selecting a compatible one of the plurality of blade tip modules (14) based upon the length of the selected blade extension portion (13),
wherein the step of attaching the blade tip module (14) to the tip end (9) of the blade is made using the selected blade tip module (14).

14. The method according to any of claims 12 to 13, wherein the wind turbine blade assembly is for use on a wind turbine (1) having a given power rating irrespective of the length of the at least one selected blade extension portion (13).

15. A method of retrofitting a wind turbine blade, the method comprising the steps:
providing an existing wind turbine blade having at least one main blade portion (12) with a root end (8) and a tip end (9), and a blade tip module (14) attached to the tip end (12B) of the at least one main blade portion (12);
removing the blade tip module (14) from the at least one main blade portion (12) of the existing wind turbine blade;
providing a plurality of blade extension portions (13),
selecting at least one of the plurality of blade extension portions (13) to achieve a desired turbine blade length, and
connecting a metallic blade tip module (14) to the at least one main blade portion (12) with the at least one selected blade extension portion (13) disposed between the tip end (12B) of the main blade portion (12) and the blade tip module (14), wherein the blade tip module (14) is configured as a lightning receptor, and wherein the blade tip module (14) has an aerofoil profile.

## Patentansprüche

1. Windkraftanlagenblattanordnung mit einem Wurzelende (8), einem Spitzenende (9), einer Blattvorderkante (10), einer Blatthinterkante (11) und einer Spannweite in Spannweitenrichtung, wobei die Blattanordnung Folgendes umfasst:
mindestens einen Hauptblattabschnitt (12);
ein metallisches Blattspitzenmodul (14), das als Blitzrezeptor konfiguriert ist, wobei das metallische Blattspitzenmodul (14) ein Tragflügelprofil aufweist; **dadurch gekennzeichnet, dass**:
die Windkraftanlagenblattanordnung weiter mindestens einen Blattverlängerungsabschnitt (13) umfasst, der einen Tragflügelbereich aufweist;
der mindestens eine Hauptblattabschnitt (12) und das Blattspitzenmodul (14) in Spannweitenrichtung voneinander beabstandet sind und der mindestens eine Blattverlängerungsabschnitt (13) zwischen dem mindestens einen Hauptblattabschnitt (12) und dem Blattspitzenmodul (14) am Spitzenende (9) der Blattanordnung angebracht ist, sodass der mindestens eine Blattverlängerungsabschnitt zwischen dem mindestens einen Hauptblattabschnitt und dem Blattspitzenmodul angeordnet ist;
und eine Spannweitenlänge jedes Blattverlängerungsabschnitts (13) nicht größer als 10 % der Spannweite der Blattanordnung ist.

2. Windkraftanlagenblattanordnung nach Anspruch 1, wobei das Blattspitzenmodul (14) ausschließlich aus Metall besteht.

3. Windkraftanlagenblattanordnung nach einem der vorstehenden Ansprüche, wobei das Blattspitzenmodul (14) elektrisch mit einem Blitzschutzsystem (17) der Windkraftanlagenblattanordnung verbunden ist.

4. Windkraftanlagenblattanordnung nach einem der vorstehenden Ansprüche, wobei der mindestens eine Blattverlängerungsabschnitt (13) weiter mindestens einen Kanal (35) umfasst, der sich durch ihn hindurch erstreckt, und wobei der mindestens eine Hauptblattabschnitt (12) und das Blattspitzenmodul (14) jeweils durch den mindestens einen Kanal (35) miteinander verbunden sind.

5. Windkraftanlagenblattanordnung nach einem der vorstehenden Ansprüche, wobei der mindestens eine Hauptblattabschnitt (12) einen jeweiligen ersten Steckverbinder aufweist und das Blattspitzenmodul (14) einen jeweiligen zweiten Steckverbinder aufweist, und der mindestens eine Hauptblattabschnitt (12) und das Blattspitzenmodul (14) über die jeweiligen ersten und zweiten Steckverbinder miteinander verbunden sind, optional, wobei der erste Steckverbinder ein erster Vorsprung (31) ist, der zweite Steckverbinder ein zweiter Vorsprung (33) ist und der erste (31) und der zweite (33) Vorsprung innerhalb des mindestens einen Blattverlängerungsabschnitts (13) überlappen, und weiter optional, wobei der zweite Vorsprung (33) einen Schlitz (34) aufweist, der den ersten Vorsprung aufnimmt.

6. Windkraftanlagenblattanordnung nach Anspruch 5, wobei der erste und der zweite Steckverbinder sowohl eine mechanische als auch eine elektrische Verbindung darstellen.

7. Windkraftanlagenblattanordnung nach einem der vorstehenden Ansprüche, wobei ein Spitzenende (12B) des mindestens einen Hauptblattabschnitts (12) und ein innenliegendes Ende (13A) des mindestens einen Blattverlängerungsabschnitts (13) zusammenpassende Tragflügelbereiche aufweisen, und/oder wobei ein innenliegendes Ende (14A) des Blattspitzenmoduls (14) und ein Spitzenende (12B) des mindestens einen Hauptblattabschnitts (12) zusammenpassende Tragflügelbereiche aufweisen.

8. Windkraftanlagenblattanordnung nach einem der vorstehenden Ansprüche, wobei der mindestens eine Hauptblattabschnitt (12) und der mindestens eine Blattverlängerungsabschnitt (13) jeweils einen Verbundwerkstoff beinhalten.

9. Windkraftanlagenblattanordnung nach einem der vorstehenden Ansprüche, wobei der mindestens eine Hauptblattabschnitt (12) in Richtung der Spannweite verjüngt ist und/oder wobei der mindestens eine Blattverlängerungsabschnitt (13) in Richtung der Spannweite verjüngt ist.

10. Windkraftanlagenblattanordnung nach einem der Ansprüche 1 bis 8, wobei der mindestens eine Blattverlängerungsabschnitt (13) einen konstanten Tragflügelbereich in der Spannweitenrichtung aufweist.

11. Windkraftanlage (1), umfassend die Windkraftanlagenblattanordnung nach einem der vorstehenden Ansprüche.

12. Verfahren zur Herstellung einer Windkraftanlagenblattanordnung mit einem Wurzelende (8), einem Spitzenende (9), einer Blattvorderkante (10), einer Blatthinterkante (11) und einer Spannweite in Spannweitenrichtung, wobei das Verfahren die folgenden Schritte umfasst:
Herstellung mindestens eines Hauptblattabschnitts (12) in mindestens einer Form (81);
Entfernen des mindestens einen Hauptblattabschnitts (12) aus der mindestens einen Form (81);
Bereitstellung einer Vielzahl von Blattverlängerungsabschnitten (13), die jeweils einen Tragflügelbereich aufweisen;
Bereitstellung mindestens eines metallischen Blattspitzenmoduls (14), das als Blitzrezeptor konfiguriert ist, wobei das metallische Blattspitzenmodul (14) ein Tragflügelprofil aufweist;
Auswählen mindestens eines der Vielzahl von Blattverlängerungsabschnitten (13), um eine gewünschte Länge der Turbinenblattanordnung zu erreichen, wobei die Länge in Spannweitenrichtung jedes ausgewählten Blattverlängerungsabschnitts (13) nicht mehr als 10 % der Spannweite der Blattanordnung beträgt,
Anbringen des ausgewählten Blattverlängerungsabschnitts (13) an einem Spitzenende (12B) des mindestens einen Hauptblattabschnitts (12), nachdem der mindestens eine Hauptblattabschnitt (12) aus der mindestens einen Form (81) entfernt worden ist, und
Anbringen des Blattspitzenmoduls (14) an das Spitzenende (9) der Blattanordnung.

13. Verfahren nach Anspruch 12, wobei jeder der Vielzahl von Blattverlängerungsabschnitten (13) eine unterschiedliche Länge aufweist, und das Verfahren weiter die folgenden Schritte umfasst:
Bereitstellen einer Vielzahl von metallischen Blattspitzenmodulen (14), die jeweils als Blitzrezeptor konfiguriert sind, wobei jedes der metallischen Blattspitzenmodule (14) ein Tragflügelprofil aufweist und jedes der Vielzahl von Blattspitzenmodulen (14) mit einem der Vielzahl von Blattverlängerungsabschnitten (13) kompatibel ist; und
Auswahl eines kompatiblen Moduls aus der Vielzahl von Blattspitzenmodulen (14) auf der Grundlage der Länge des ausgewählten Blattspitzenabschnitts (13),
wobei der Schritt des Anbringens des Blattspitzenmoduls (14) an das Spitzenende (9) des Blatts unter Verwendung des ausgewählten Blattspitzenmoduls (14) erfolgt.

14. Verfahren nach einem der Ansprüche 12 bis 13, wobei die Windkraftanlagenblattanordnung zur Verwendung an einer Windkraftanlage (1) mit einer bestimmten Nennleistung unabhängig von der Länge des mindestens einen ausgewählten Blattverlängerungsabschnitts (13) bestimmt ist.

15. Verfahren zum Nachrüsten eines Windkraftanlagenblatts, wobei das Verfahren die folgenden Schritte umfasst: Bereitstellen eines vorhandenen Windkraftanlagenblatts mit mindestens einem Hauptblattabschnitt (12) mit einem Wurzelende (8) und einem Spitzenende (9) und einem Blattspitzenmodul (14), das an dem Spitzenende (12B) des mindestens einen Hauptblattabschnittes (12) angebracht ist;
Entfernen des Blattspitzenmoduls (14) von dem mindestens einen Hauptblattabschnitt (12) des vorhandenen Windkraftanlagenblatts;
Bereitstellung einer Vielzahl von Blattverlängerungsabschnitten (13),
Auswahl mindestens eines der Vielzahl von Blattverlängerungsabschnitten (13), um eine gewünschte Turbinenblattlänge zu erreichen, und
Verbinden eines metallischen Blattspitzenmoduls (14) mit dem mindestens einen Hauptblattabschnitt (12), wobei der mindestens eine ausgewählte Blattverlängerungsabschnitt (13) zwischen dem Spitzenende (12B) des Hauptblattabschnitts (12) und dem Blattspitzenmodul (14) angeordnet ist, wobei das Blattspitzenmodul (14) als Blitzrezeptor konfiguriert ist, und wobei das Blattspitzenmodul (14) ein Tragflügelprofil aufweist.

## Revendications

1. Ensemble de pale d'éolienne présentant une extrémité de racine (8), une extrémité de pale (9), un bord d'attaque (10), un bord de fuite (11) et une envergure dans une direction dans le sens de l'envergure, l'ensemble de pale comprenant :
au moins une partie pale principale (12) ;
un module de bout de pale métallique (14) configuré en tant que récepteur de foudre, ledit module de bout de pale métallique (14) présentant un profil de surface portante ; **caractérisé en ce que** :
l'ensemble de pale d'éolienne comprend en outre au moins une partie d'extension de pale (13) présentant une section de surface portante ;
la au moins une partie de pale principale (12) et le module de bout de pale (14) sont espacés l'un de l'autre dans la direction dans le sens de l'envergure et la au moins une partie d'extension de pale (13) est fixée entre la au moins une partie de pale principale (12) et le module de bout de pale (14) au niveau de l'extrémité de pale (9) de l'ensemble de pale, de telle sorte que la au moins une partie d'extension de pale est prise en sandwich entre la au moins une partie de pale principale et le module de bout de pale ;
et une longueur dans le sens de l'envergure de chaque partie d'extension de pale (13) ne fait pas plus de 10 % de l'envergure d'ensemble de pale.

2. Ensemble de pale d'éolienne selon la revendication 1, dans lequel le module de bout de pale (14) est constitué exclusivement de métal.

3. Ensemble de pale d'éolienne selon une quelconque revendication précédente, dans lequel le module de bout de pale (14) est électriquement connecté à un système de protection contre la foudre (17) de l'ensemble de pale d'éolienne.

4. Ensemble de pale d'éolienne selon une quelconque revendication précédente, dans lequel la au moins une partie d'extension de pale (13) comprend en outre au moins un canal (35) s'étendant à travers celle-ci, et dans lequel la au moins une partie de pale principale (12) et le module de bout de pale (14) sont reliés l'un à l'autre par le biais de l'au moins un canal (35) respectivement.

5. Ensemble de pale d'éolienne selon une quelconque revendication précédente, dans lequel la au moins une partie de pale principale (12) présente un premier raccord respectif, et le module de bout de pale (14) présente un second raccord respectif, et la au moins une partie de pale principale (12) et le module de bout de pale (14) sont reliés l'un à l'autre via les premier et second raccords respectifs, optionnellement dans lequel le premier raccord est une première projection (31), le second raccord est une seconde projection (33), et les première (31) et seconde (33) projections se chevauchent à l'intérieur de la au moins une partie d'extension de pale (13), et en outre optionnellement dans lequel la seconde projection (33) présente une fente (34) qui reçoit la première projection.

6. Ensemble de pale d'éolienne selon la revendication 5, dans lequel les premier et second raccords servent à la fois de raccordement mécanique et de raccordement électrique.

7. Ensemble de pale d'éolienne selon une quelconque revendication précédente, dans lequel une extrémité de pale (12B) de la au moins une partie de pale principale (12) et une extrémité intérieure (13A) de la au moins une partie d'extension de pale (13) présentent des sections de surface portante associées, et/ou dans lequel une extrémité intérieure (14A) du module de bout de pale (14) et une extrémité de pale (12B) de la au moins une partie de pale principale (12) présentent des sections de surface portante associées.

8. Ensemble de pale d'éolienne selon une quelconque revendication précédente, dans lequel la au moins une partie de pale principale (12) et la au moins une partie d'extension de pale (13) incluent chacune un matériau composite.

9. Ensemble de pale d'éolienne selon une quelconque revendication précédente, dans lequel la au moins une partie de pale principale (12) se resserre dans la direction dans le sens de l'envergure, et/ou dans lequel la au moins une partie d'extension de pale (13) se resserre dans la direction dans le sens de l'envergure.

10. Ensemble de pale d'éolienne selon l'une quelconque des revendications 1 à 8, dans lequel la au moins une partie d'extension de pale (13) présente une section de surface portante constante dans la direction dans le sens de l'envergure.

11. Éolienne (1) comprenant l'ensemble de pale d'éolienne selon une quelconque revendication précédente.

12. Procédé de fabrication d'un ensemble de pale d'éolienne présentant une extrémité de racine (8), une extrémité de pale (9), un bord d'attaque (10), un bord de fuite (11) et une envergure dans une direction dans le sens de l'envergure, le procédé comprenant les étapes consistant à :
fabriquer au moins une partie de pale principale (12) dans au moins un moule (81) ;
retirer la au moins une partie de pale principale (12) du au moins un moule (81) ;
fournir une pluralité de parties d'extension de pale (13) présentant chacune une section de surface portante ;
fournir au moins un module de bout de pale métallique (14) configuré en tant que récepteur de foudre, ledit module de bout de pale métallique (14) présentant un profil de surface portante ;
sélectionner au moins une de la pluralité de parties d'extension de pale (13) pour atteindre une longueur d'ensemble de pale d'éolienne souhaitée, dans lequel la longueur dans le sens de l'envergure de chaque partie d'extension de pale (13) sélectionnée ne fait pas plus de 10 % de l'envergure d'ensemble de pale,
fixer la partie d'extension de pale (13) sélectionnée à une extrémité de pale (12B) de la au moins une partie de pale principale (12) après que la au moins une partie de pale principale (12) a été retirée du au moins un moule (81), et
fixer le module de bout de pale (14) à l'extrémité de pale (9) de l'ensemble de pale.

13. Procédé selon la revendication 12, dans lequel chacune de la pluralité de parties d'extension de pale (13) présente une longueur différente, et le procédé comprenant en outre les étapes consistant à :
fournir une pluralité de modules de bout de pale métalliques (14) configurés chacun en tant que récepteur de foudre, chacun desdits modules de bout de pale métalliques (14) présentant un profil de surface portante et chacun de la pluralité de modules de bout de pale (14) étant compatible avec l'une de la pluralité de parties d'extension de pale (13) ; et
sélectionner un module compatible de la pluralité de modules de bout de pale (14) sur la base de la longueur de la partie d'extension de pale (13) sélectionnée,
dans lequel l'étape de fixation du module de bout de pale (14) à l'extrémité de pale (9) de la pale est réalisée en utilisant le module de bout de pale (14) sélectionné.

14. Procédé selon l'une quelconque des revendications 12 à 13, dans lequel l'ensemble de pale d'éolienne est destinée à une utilisation sur une éolienne (1) présentant une puissance nominale donnée quelle que soit la longueur de la au moins une partie d'extension de pale (13) sélectionnée.

15. Procédé de modification d'une pale d'éolienne, le procédé comprenant les étapes consistant à : fournir une pale d'éolienne existante présentant au moins une partie pale principale (12) avec une extrémité de racine (8) et une extrémité de pale (9), et un module de bout de pale (14) fixé à l'extrémité de pale (12B) de la au moins une partie de pale principale (12) ;
retirer le module de bout de pale (14) de la au moins une partie de pale principale (12) de la pale d'éolienne existante ;
fournir une pluralité de parties d'extension de pale (13),
sélectionner au moins une de la pluralité de parties d'extension de pale (13) pour atteindre une longueur de pale de turbine souhaitée, et
raccorder un module de bout de pale métallique (14) à la au moins une partie pale principale (12) à l'aide de la au moins une partie d'extension de pale (13) sélectionnée disposée entre l'extrémité de pale (12B) de la partie de pale principale (12) et le module bout de pale (14), dans lequel le module de bout de pale (14) est configuré en tant que récepteur de foudre, et dans lequel le module de bout de pale (14) présente un profil de surface portante.
